# EUROPEAN PATENT SPECIFICATION

(11) **EP 3 725 710 B1**
(45) Date of publication and mention of the grant of the patent: **28.02.2024**
(21) Application number: 18889199.8
(22) Date of filing: 12.12.2018
(51) Int. Cl.: A24C 5/32, A24C 5/33, A24C 5/47

(54) **DRUM ASSEMBLY FOR CIGARETTTE PRODUCTION**
TROMMELANORDNUNG FÜR DIE ZIGARETTENHERSTELLUNG
ENSEMBLE TAMBOUR POUR LA PRODUCTION DE CIGARETTES

(30) Priority: 13.12.2017 CN 201711332261
(43) Date of publication of application: 21.10.2020
(73) Proprietor: Hongta Tobacco (Group) Co., Ltd, Yuxi, Yunnan 653100 (CN)
(72) Inventor: YANG, Chengbo, Yuxi, Yunnan 653100 (CN); LIN, Guo, Yuxi, Yunnan 653100 (CN); ZHOU, Yuling, Yuxi, Yunnan 653100 (CN); ZHANG, Shufang, Yuxi, Yunnan 653100 (CN); LI, Shaojie, Yuxi, Yunnan 653100 (CN); WANG, Yongkang, Yuxi, Yunnan 653100 (CN); DING, Fujun, Yuxi, Yunnan 653100 (CN); DENG, Xiuhong, Yuxi, Yunnan 653100 (CN); CHANG, Zhao, Yuxi, Yunnan 653100 (CN); LIANG, Yuan, Yuxi, Yunnan 653100 (CN); ZENG, Xu, Yuxi, Yunnan 653100 (CN); CHU, Ru, Yuxi, Yunnan 653100 (CN)
(74) Representative: karo IP
(86) International application number: PCT/CN2018/120456
(87) International publication number: WO 2019/114728

(56) References cited:
- EP-A2- 3 141 134
- WO-A2-2006/016264
- CN-A- 108 002 003
- CN-U- 204 120 207
- CN-U- 204 351 058
- CN-U- 207 791 975
- CN-Y- 2 840 698
- DE-B- 1 164 904
- DE-C- 933 437
- US-A- 3 036 581
- US-A- 3 039 367
- US-A- 3 164 243

## Description

### BACKGROUND OF THE INVENTION

### Technical Field

The present invention relates to a delivering separating mechanism, more particularly to a separating, guiding and delivering mechanism for the production of cigarettes, which primarily serves to separate and deliver post-cut cigarettes, belonging to the field of tobacco processing technology.

### Description of Related Art

Currently, the cigarette making machines used in the tobacco industry can produce cigarette segments having a double-length within 100-150mm. These cigarette segments are cut into single-length segments as they pass through the cutting drum. The cut cigarette segments are then separated by the first and second separating drums, and converged with double-length long filters at the converging drum, so as to complete supply of cigarettes and prepare for the subsequent twisting and connecting step in cigarette production.

In the existing cigarette making machine, separation and deliver of cigarette segments are achieved by a tapered, separated, dual-drum structure with an inner portion and an outer portion. Therein, the first separating drum is composed of two separate cone-like members that are apart from each other by an interval "A." The two members are installed on the same angled shaft. Two parts of the shaft include an angle and connected in transmission by an intermediate bevel gear, thereby allowing the two drum portions to rotate on their own axes, respectively, and it receives two parallel single-length cigarette segments from the cutting drum and rotates them clockwise for a predetermined angle, thus the two single-length cigarette segments are separated by a predetermined distance and include an predetermined angle with each other as they are delivered to the second separating drum. The second separating drum is similar to the first separating drum, with its two parts installed on the same angled shaft but rotating in an opposite direction. After the second separating drum rotates for a certain angle, the cigarette segments are returned to become parallel to each other. At this time, the two single-length cigarette segments are separated by an interval "B" and delivered to the converging drum, wherein only when B is greater than the length of a double-length long filter segments, the cigarette segments can be assembled with the filter segments. In the event that A is smaller than the length L of the double-length cigarette segments of the cigarette, this separating and delivering mechanism is incapable of production.

Hence, for making cigarette production lines more adaptable, there is a need for a delivering mechanism that has improved separating precision and this is important to address the technical issues described previously.

US 3 164 243 A discloses a mechanism according to the preamble of claim 1. facilitates production and installation, provides high-reliability and requires low costs while ensuring precise separation and guidance. The present invention thereby realizes separation and deliver of single-length cigarette segments.

To address the shortcomings of the prior art and to achieve the objective of the present invention, the disclosed separating, guiding and delivering mechanism for the production of cigarettes implements the following structural designs and technical schemes.

A separating, guiding and delivering mechanism for the production of cigarettes comprises a cutting drum, a delivering drum and a separating drum arranged parallel to each other, wherein a flow guide plate is detachably installed above the separating drum, and a fixing member is installed on a convex outer surface of the flow guide plate, in which the fixing member is connected to the connecting member through a pin, one end of the connecting member is fixed to a fixed seat of the separating drum through a fastening member, and the other end of the connecting member is provided with a fixing handle, and on an inside concave surface of the flow guide plate, a directing plate that matches it is radially arranged.

As another preferred technical scheme of the present invention, the separating drum and the delivering drum rotate in directions opposite to each other, and the delivering drum and the cutting drum rotate in directions opposite to each other.

As a preferred technical scheme of the present invention, the flow guide plate is an integrally formed steel, "C-shaped" or "semicircular" component, in which the "semicircular" or "C-shaped" flow guide plate and the fixed seat of the separating drum are detachably connected to each other.

As a preferred technical scheme of the present invention, the fixing member is an integrally formed steel, hollow rod-like component.

As a further preferred technical scheme of the present invention, the fixing member is a column made of an elastic stainless steel material.

As yet a further preferred technical scheme of the present invention, the directing plate is an integrally formed steel, "V-shaped" or "triangular" component, and the "isosceles triangular" or "V-shaped" directing plate is integrally connected to the flow guide plate, to form a one-piece structure.

As yet a further preferred technical scheme of the present invention, the directing plate extends from a top edge at one end of the flow guide plate to a bottom edge at the other end of the flow guide plate.

As a further preferred technical scheme of the present invention, the fastening member (7) is a hex bolt or a hex screw.

As a still further preferred technical scheme of the present invention, flow guide and positioning blocks are provided at two sides of the flow guide plate, which are arranged opposite to each other and forms symmetrical structure.

As a yet further preferred technical scheme of the present invention, the fixing member is vertically installed on the convex outer surface of the flow guide plate, and the fixing member and the flow guide plate are designed as an integrated structure, in which the connecting member and the fixing handle are designed as a one-piece structure or an assembled structure, the assembled structure is formed by assembling the connecting member and the fixing handle in a detachably screwed connection.

The working principle of the present invention is described below. The disclosed separating, guiding and delivering mechanism for the production of cigarettes is assembled for preparation before use. In installation, an operator installs the flow guide plate on the separating drum in a detachable manner. To start operation, the relevant components are activated. During this process, since the cutting drum, the delivering drum and the separating drum are provided with a guiding channel and each equipped therein with a suction box, which controls the cigarette suction effective area through rotation of the corresponding drums. In operation, every double-length cigarette segment is cut into two single-length cigarette segments by the cutting knife above the cutting drum. Then the delivering drum rotates clockwise to deliver the cut segments to the separating drum. With the "V-shaped" flow guide plate installed on the separating drum, and without suction in the section of the guiding channel corresponding to the single-length cigarette segments, anticlockwise rotation of the separating drum can make the single-length cigarette segments shift along the "V-shaped" flow guide plate and become separated from each other, such that the separated single-length cigarette segments are shifted to the inside of the flow guide plate and get held there. After the single-length cigarette segments depart from the directing plate of the flow guide plate, in response to the rotation of the separating drum, the single-length cigarette segments can precisely reach the suction area of the separating drum. On the separating drum, the final separated interval between two single-length cigarette segments is "M" and M is greater than the length of one double-length long filter segment. At last, two single-length cigarette segments are delivered to the converging drum, thereby realizing assembly of the single-length cigarette segment and the filter segment.

As compared to the prior art, the present invention is advantageous for being able to satisfy high-precision, high-reliability separation, and can realize high-precision, high-reliability guidance during cigarettes separation. While satisfying the requirements of the complicated load environment for cigarettes separation, the mechanism uses the tangential force and the normal force to realize control of trajectory for cigarettes separation. It is adaptive to cigarettes separation applications involving different functions, different shapes, and different sizes. The entire mechanism is small in volume, light in weight, easy to fabricate, easy to assemble, and easy to maintain, while providing high separating guidance precision and high reliability, thereby facilitating the subsequent twisting and connecting step in cigarette production. It realizes separation and deliver of single-length cigarette segments, and allows single-length cigarette segments to be smoothly shifted, separated and precisely positioned.

### BRIEF DESCRIPTION OF THE DRAWINGS

The invention as well as a preferred technical scheme of use, further objectives and advantages thereof will be best understood by reference to the following detailed description of illustrative embodiments when read in conjunction with the accompanying drawings, wherein:
FIG. 1 is an overall structural drawing of the present invention;
FIG. 2 is a bottom view of the present invention;
FIG. 3 is a cross-sectional view of FIG. 2;
FIG. 4 is an overall structural drawing of a flow guide plate (4) according to the present invention;
FIG. 5 is a bottom view of the flow guide plate (4);
FIG. 6 is a view of the present invention in work mode; and
FIG. 7 is another view of the present invention in work mode.

Reference signs of the figures: 1- cutting drum, 2- delivering drum, 3- separating drum, 31-fixed seat of the separating drum, 4- flow guide plate, 41- fixing member, 42- directing plate, 43- flow guide and positioning block, 5-pin, 6- connecting member, 61- fixing handle, 7-fastening member, 8- double-length cigarette segment, 9- single-length cigarette segment.

### DETAILED DESCRIPTION OF THE INVENTION

For further illustrating the means and functions by which the present invention achieves the certain objectives, the following description, in conjunction with the accompanying drawings and preferred embodiments, is set forth as below to illustrate the implement, structure, features and effects of the subject matter of the present invention.

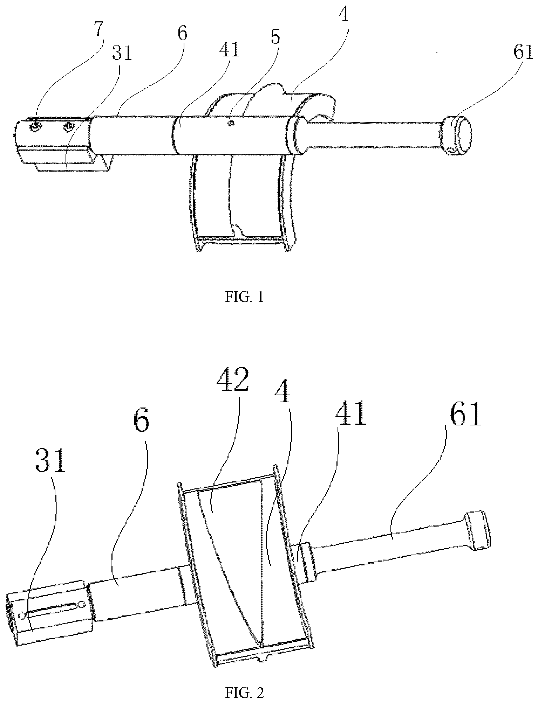

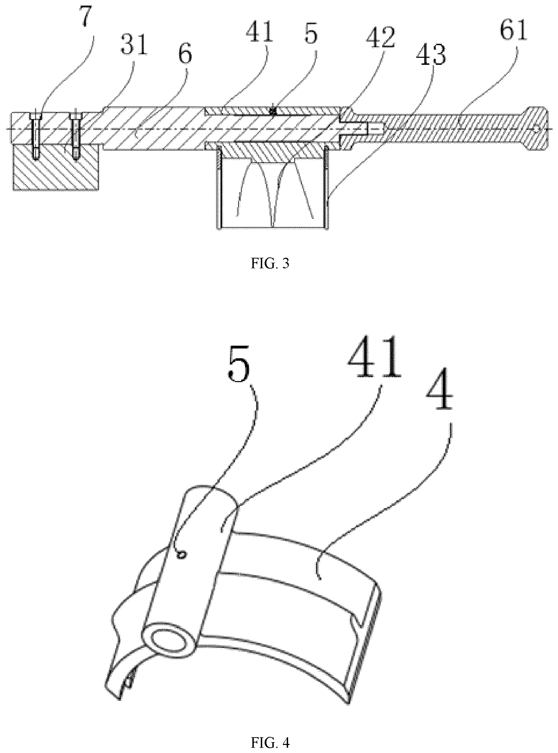

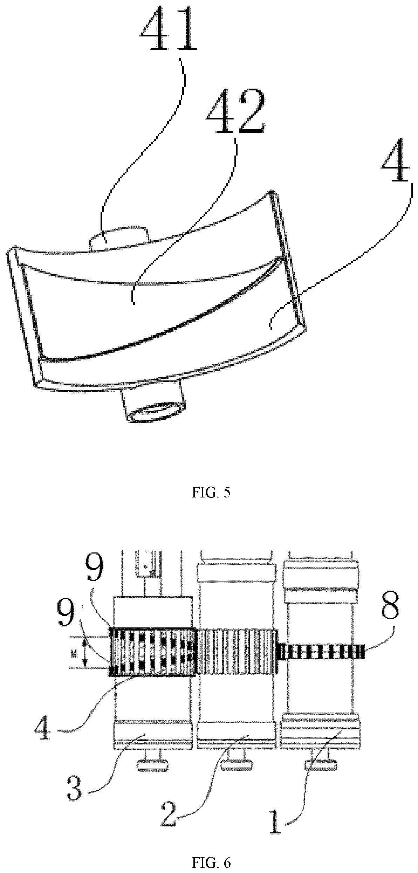

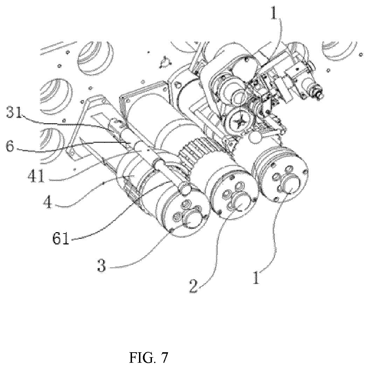

As shown in FIG. 1 through FIG. 7, a delivering mechanism comprises a cutting drum 1, a delivering drum 2 and a separating drum 3 arranged parallel to each other. A flow guide plate 4 is detachably installed above the separating drum 3, and a fixing member 41 is installed on a convex outer surface of the flow guide plate 4. The fixing member 41 is connected to the connecting member 6 through a pin 5. One end of the connecting member 6 is fixed to a fixed seat 31 of the separating drum through a fastening member 7, and the other end of the connecting member 6 is provided with a fixing handle 61. On an inside concave surface of the flow guide plate 4, a directing plate 42 that matches it is radially arranged.

Further, the separating drum 3 and the delivering drum 2 rotate in directions opposite to each other, and the delivering drum 2 and the cutting drum 1 rotate in directions opposite to each other.

Further, the flow guide plate 4 is an integrally formed steel, "C-shaped" or "semicircular" component, in which the "semicircular" or "C-shaped" flow guide plate 4 and the fixed seat 31 of the separating drum are detachably connected to each other.

Particularly, the fixing member 41 is a column made of an elastic stainless steel material.

Further, the directing plate 42 is an integrally formed steel, "V-shaped" or "triangular" component. The "isosceles triangular" or "V-shaped" directing plate 42 is integrally connected to the flow guide plate 4, formed as a one-piece structure.

Particularly, the directing plate 42 extends from a top edge at one end of the flow guide plate 4 to a bottom edge at the other end of the flow guide plate 4.

Further, the fastening member 7 is a hex bolt or a hex screw.

Further, two flow guide and positioning blocks 43 are provided at two sides of the flow guide plate 4, which are arranged opposite to each other and forms symmetrical structure.

Further, the fixing member 41 is vertically installed on the convex outer surface of the flow guide plate 4, and the fixing member 41 and the flow guide plate 4 are designed as an integrally formed structure, in which the connecting member 6 and the fixing handle 61 are designed as a one-piece structure or an assembled structure that is formed by assembling the connecting member 6 and the fixing handle 61 in a detachably screwed connection.

To sum up, the present invention is more specifically implemented in a way described below.

Before use, the disclosed separating, guiding and delivering mechanism for the production of cigarettes of the present invention has to be assembled for preparation. In installation, an operator installs the flow guide plate 4 on the separating drum 3 in a detachable manner. To start operation, the relevant components are activated. During this process, since the cutting drum 1, the delivering drum 2 and the separating drum 3 are provided with a guiding channel and each equipped therein with a suction box, which controls the cigarette suction effective area through rotation of the corresponding drums. In operation, every double-length cigarette segment 8 is cut into two single-length cigarette segments 9 by the cutting knife above the cutting drum 1. Then the delivering drum 2 rotates clockwise to deliver the cut segments to the separating drum 3. With the "V-shaped" flow guide plate 4 installed on the separating drum 3, and without suction in the section of the guiding channel corresponding to the single-length cigarette segments, anticlockwise rotation of the separating drum 3 can make the single-length cigarette segments 9 shift along the "V-shaped" flow guide plate 4 and become separated from each other, such that the separated single-length cigarette segments 9 can just be shifted to the inside of the flow guide plate 4 and get held there. After the single-length cigarette segments 9 depart from the directing plate 42 of the flow guide plate 4, in response to the rotation of the separating drum 3, the single-length cigarette segments 9 can precisely reach the suction area of the separating drum 3. On the separating drum 3, the final separated interval between two single-length cigarette segments 9 is "M" and M is greater than the length of one double-length long filter segment. At last, two single-length cigarette segments are delivered to the converging drum, thereby realizing assembly of the single-length cigarette segment and the filter segment.

The present invention has been described with reference to the preferred embodiments and it is understood that the embodiments are not intended to limit the scope of the claimed subject matter of the present invention.

## Claims

1. A separating, guiding and delivering mechanism for the production of cigarettes, comprising a cutting drum (1), a delivering drum (2) and a separating drum (3) arranged parallel to each other, wherein a flow guide plate (4) for guiding a flow of cigarette segments is detachably installed above the separating drum (3),
wherein on an inside concave surface of the flow guide plate (4), a correspondingly shaped directing plate (42) is arranged, and wherein a fixing member (41) is installed on a convex outer surface of the flow guide plate (4), **characterized in that** the fixing member (41) is connected to a connecting member (6) through a pin (5), one end of the connecting member (6) is fixed to a fixed seat (31) of the separating drum through a fastening member (7), and the other end of the connecting member (6) is provided with a fixing handle (61).

2. The separating, guiding and delivering mechanism for the production of cigarettes of claim 1, wherein the separating drum (3) and the delivering drum (2) rotate in directions opposite to each other, and the delivering drum (2) and the cutting drum (1) rotate in directions opposite to each other.

3. The separating, guiding and delivering mechanism for the production of cigarettes of claim 1, wherein the flow guide plate (4) is an integrally formed steel, "C-shaped" or "semicircular" component, the "semicircular" or "C-shaped" flow guide plate (4) and the fixed seat (31) of the separating drum are detachably connected to each other.

4. The separating, guiding and delivering mechanism for the production of cigarettes of claim 1, wherein the fixing member (41) is an integrally formed steel, hollow rod-like component.

5. The separating, guiding and delivering mechanism for the production of cigarettes of claim 4, wherein the fixing member (41) is a column made of an elastic stainless steel material.

6. The separating, guiding and delivering mechanism for the production of cigarettes of claim 1, wherein the directing plate (42) is an integrally formed steel, "V-shaped" or "triangular" component, and the "isosceles triangular" or "V-shaped" directing plate (42) is integrally connected to the flow guide plate (4), to form a one-piece structure.

7. The separating, guiding and delivering mechanism for the production of cigarettes of claim 6, wherein the directing plate (42) extends from a top edge at one end of the flow guide plate (4) to a bottom edge at the other end of the flow guide plate (4).

8. The separating, guiding and delivering mechanism for the production of cigarettes of claim 1, wherein the fastening member (7) is a hex bolt or a hex screw.

9. The separating, guiding and delivering mechanism for the production of cigarettes of claim 1, wherein flow guide and positioning blocks (43) are provided at two sides of the flow guide plate (4), which are arranged opposite to each other and forms symmetrical structure.

10. The separating, guiding and delivering mechanism for the production of cigarettes of claim 1, wherein the fixing member (41) is vertically installed on the convex outer surface of the flow guide plate (4), and the fixing member (41) and the flow guide plate (4) are designed as an integrally formed structure, the connecting member (6) and the fixing handle (61) are designed as a one-piece structure or an assembled structure, the assembled structure is formed by assembling the connecting member (6) and the fixing handle (61) in a detachably screwed connection.

## Patentansprüche

1. Ein Trenn-, Lenk- und Abgabemechanismus für die Herstellung von Zigaretten, umfassend eine Schneidtrommel (1), einer Abgabetrommel (2) und eine Trenntrommel (3), die parallel zueinander angeordnet sind, wobei oberhalb der Trenntrommel (3) eine Flusslenkplatte (4) zum Lenken eines Flusses von Zigarettensegmenten lösbar angebracht ist, wobei auf einer inneren konkaven Fläche der Flusslenkplatte (4) eine entsprechend geformte Lenkplatte (42) angeordnet ist, und wobei ein Befestigungselement (41) an einer konvexen Außenfläche der Flusslenkplatte (4) installiert ist, **dadurch gekennzeichnet, dass** das Befestigungselement (41) mit einem Verbindungselement (6) über einen Stift (5) verbunden ist, ein Ende des Verbindungselements (6) an einem festen Sitz (31) der Trenntrommel über ein Halteelement (7) befestigt ist und das andere Ende des Verbindungselements (6) mit einem Befestigungsgriff (61) versehen ist.

2. Trenn-, Lenk- und Abgabemechanismus für die Herstellung von Zigaretten nach Anspruch 1, wobei sich die Trenntrommel (3) und die Abgabetrommel (2) in entgegengesetzten Richtungen drehen und sich die Abgabetrommel (2) und die Schneidtrommel (1) in entgegengesetzten Richtungen drehen.

3. Trenn-, Lenk- und Abgabemechanismus für die Herstellung von Zigaretten nach Anspruch 1, wobei die Flusslenkplatte (4) ein integral geformtes, "C-förmiges" oder "halbkreisförmiges" Bauteil aus Stahl ist und die "halbkreisförmige" oder "C-förmige" Flusslenkplatte (4) und der feste Sitz (31) der Trenntrommel lösbar miteinander verbunden sind.

4. Trenn-, Lenk- und Abgabemechanismus für die Herstellung von Zigaretten nach Anspruch 1, wobei das Befestigungselement (41) ein integral geformtes, hohlstabartiges Bauteil aus Stahl ist.

5. Trenn-, Lenk- und Abgabemechanismus für die Herstellung von Zigaretten nach Anspruch 4, wobei das Befestigungselement (41) eine Säule aus einem elastischen, rostfreien Stahlmaterial ist.

6. Trenn-, Lenk- und Abgabemechanismus für die Herstellung von Zigaretten nach Anspruch 1, wobei die Lenkplatte (42) ein integral geformtes "V-förmiges" oder "dreieckiges" Bauteil aus Stahl ist und die "gleichschenklig dreieckige" oder "V-förmige" Lenkplatte (42) integral mit der Flusslenkplatte (4) verbunden ist, um eine einteilige Struktur zu bilden.

7. Trenn-, Lenk- und Abgabemechanismus für die Herstellung von Zigaretten nach Anspruch 6, wobei sich die Lenkplatte (42) von einer Oberkante an einem Ende der Flusslenkplatte (4) zu einer Unterkante am anderen Ende der Flusslenkplatte (4) erstreckt.

8. Trenn-, Lenk- und Abgabemechanismus für die Herstellung von Zigaretten nach Anspruch 1, wobei das Halteelement (7) ein Sechskantbolzen oder eine Sechskantschraube ist.

9. Trenn-, Lenk- und Abgabemechanismus für die Herstellung von Zigaretten nach Anspruch 1, wobei an zwei Seiten der Flusslenkplatte (4) Flusslenk- und Positionierblöcke (43) vorgesehen sind, die einander gegenüberliegend angeordnet sind und einen symmetrischen Aufbau bilden.

10. Trenn-, Lenk- und Abgabemechanismus für die Herstellung von Zigaretten nach Anspruch 1, wobei das Befestigungselement (41) vertikal an der konvexen Außenfläche der Flusslenkplatte (4) angebracht ist und das Befestigungselement (41) und die Flusslenkplatte (4) als eine integral geformte Struktur ausgebildet sind, das Verbindungselement (6) und der Befestigungsgriff (61) als eine integrale Struktur oder eine zusammengesetzte Struktur ausgebildet sind, wobei die zusammengesetzte Struktur durch Zusammenfügen des Verbindungselements (6) und des Befestigungsgriffs (61) durch eine lösbare Schraubverbindung gebildet wird.

## Revendications

1. Mécanisme de séparation, de guidage et de distribution pour la production de cigarettes, comprenant un tambour de coupe (1), un tambour de distribution (2) et un tambour de séparation (3) disposés parallèlement l'un à l'autre, une plaque de guidage de flux (4) pour guider un flux de segments de cigarette étant installée de manière amovible au-dessus du tambour de séparation (3),
une plaque de direction de forme correspondante (42) étant disposée sur une surface concave intérieure de la plaque de guidage de flux (4), et un élément de fixation (41) étant installé sur une surface extérieure convexe de la plaque de guidage de flux (4), **caractérisé en ce que** l'élément de fixation (41) est relié à un élément de liaison (6) par une broche (5), une extrémité de l'élément de liaison (6) est fixée à un siège fixe (31) du tambour de séparation par un élément de fixation (7), et l'autre extrémité de l'élément de liaison (6) est pourvue d'une poignée de fixation (61).

2. Mécanisme de séparation, de guidage et de distribution pour la production de cigarettes selon la revendication 1, le tambour de séparation (3) et le tambour de distribution (2) tournant dans des directions opposées l'un à l'autre, et le tambour de distribution (2) et le tambour de coupe (1) tournant dans des directions opposées l'une à l'autre.

3. Mécanisme de séparation, de guidage et de distribution pour la production de cigarettes selon la revendication 1, la plaque de guidage de flux (4) étant un composant en acier formé d'un seul tenant « en forme de C » ou « semi-circulaire », la plaque de guidage de flux « semi-circulaire » ou « en forme de C » (4) et le siège fixe (31) du tambour de séparation étant reliés de manière amovible l'un à l'autre.

4. Mécanisme de séparation, de guidage et de distribution pour la production de cigarettes selon la revendication 1, l'élément de fixation (41) étant un composant en acier formé d'un seul tenant semblable à une tige creuse.

5. Mécanisme de séparation, de guidage et de distribution pour la production de cigarettes selon la revendication 4, l'élément de fixation (41) étant une colonne en acier inoxydable élastique.

6. Mécanisme de séparation, de guidage et de distribution pour la production de cigarettes selon la revendication 1, la plaque de direction (42) étant un élément en acier formé d'un seul tenant « en forme de V » ou « triangulaire », et la plaque de direction (42) « en forme de V » ou « triangulaire isocèle » étant reliée d'un seul tenant à la plaque de guidage de flux (4), pour former une structure d'un seul tenant.

7. Mécanisme de séparation, de guidage et de distribution pour la production de cigarettes selon la revendication 6, la plaque de guidage (42) s'étendant d'un bord supérieur à une extrémité de la plaque de guidage (4) à un bord inférieur à l'autre extrémité de la plaque de guidage (4).

8. Mécanisme de séparation, de guidage et de distribution pour la production de cigarettes selon la revendication 1, l'élément de fixation (7) étant un boulon hexagonal ou une vis hexagonale.

9. Mécanisme de séparation, de guidage et de distribution pour la production de cigarettes selon la revendication 1, des blocs de guidage et de positionnement de flux (43) étant situés sur les deux côtés de la plaque de guidage (4), qui sont disposés à l'opposé l'un de l'autre et forment une structure symétrique.

10. Mécanisme de séparation, de guidage et de distribution pour la production de cigarettes selon la revendication 1, l'élément de fixation (41) étant installé verticalement sur la surface extérieure convexe de la plaque de guidage de flux (4), et l'élément de fixation (41) et la plaque de guidage de flux (4) étant conçus comme une structure formée d'un seul tenant, l'élément de liaison (6) et la poignée de fixation (61) étant conçus comme une structure d'un seul tenant ou une structure assemblée, la structure assemblée étant formée par l'assemblage de l'élément de liaison (6) et de la poignée de fixation (61) dans une liaison vissée amovible.
